(19)

Europäisches
Patentamt
European
Patent Office
Office européen
des brevets

(11) **EP 4 745 539 A1**

(12) **EUROPEAN PATENT APPLICATION**

(43) Date of publication:
**20.05.2026 Bulletin 2026/21**

(21) Application number: **25167123.6**

(22) Date of filing: **28.03.2025**

(51) International Patent Classification (IPC):
*G01H 1/00 (2006.01)*

(52) Cooperative Patent Classification (CPC):
**G01H 1/003; G01M 13/028; G05B 23/024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.11.2024  PL 45029024**

(71) Applicant: **Akademia Górniczo-Hutnicza im.
Stanislawa Staszica
w Krakowie
30-059 Kraków (PL)**

(72) Inventor: **JABLONSKI, Adam
32-086 Bosutów (PL)**

(74) Representative: **Wlasienko, Jozef et al
Polservice
Kancelaria Rzecznikow
Patentowych sp. z o.o.
Bobrowiecka 8
00-728 Warszawa (PL)**

(54) **METHOD FOR AUTOMATIC DETECTION OF ANOMALIES IN VIBRATION SIGNALS OF ROTATING MACHINES**

(57)     The subject matter of the invention relates to a method for the automatic detection of anomalies in the vibration signals of rotating machines, including signals that may indicate the development of faults in the rotating machines, in particular vibration measurements relating to rotating machines by the automatic detection of anomalies in the machine vibration signals with the use of an anomaly detection mechanism using an automatic classifier.

The method consists in that monitoring and diagnosis are performed in terms of both identifying units or parts of an object of a rotating machine subjected to the diagnosis in such a way that vibration data in the form of a vibration signal is recorded from at least one vibration sensor (2) mounted on the housing the mechanical elements of a rotating machine (1), wherein each subsequent vibration signal is recorded at the same length and with the same sampling frequency. Then, collected vibration signals are processed in a vibration data acquisition unit (3) equipped with an anomaly detection mechanism using an automatic classifier (4) by means of which the vibration signal is modified by calculating the values of spectral amplitudes which are converted into time-series, i.e. the so-called trends, and then, for a determined set of time series, a value of a scalar statistical index is determined that is equal to the slope of the tangent line for each individual trend, after which the results of the scalar statistical index are stored. Then a histogram is determined and empty class intervals are sought that do not include any values of a scalar statistical index and constitute the threshold value of anomalies, thus allowing a potential occurrence of a failure to be determined both in terms of identifying a specific unit or part of the rotating machine (1) by mapping the determined threshold value to the stored results of the scalar statistical index and reading the corresponding spectral components, comparing them with the characteristic components of the rotating machine (1) known from the geometry of the rotating machine (1). In this way anomalies are detected on the basis of the general knowledge that an increase in vibrations as a residual process of energy conversion is related to a deterioration in the technical condition of a rotating machine (1).

FIG. 1

## Description

### FIELD OF THE INVENTION

The subject matter of the invention relates to a method for the automatic detection of anomalies in the vibration signals of rotating machines, including signals that may indicate the development of faults in rotating machines, in particular vibration measurements relating to rotating machines by the automatic detection of anomalies in machine vibration signals, with the use of an anomaly detection mechanism using an automatic classifier.

The solution according to the invention generally relates to the measurement of mechanical vibrations, in particular the measurement of vibrations transverse to the direction of their propagation in solids, especially in vibrating machines, using direct conductance to a sensor detecting such vibrations, including data processing, specially adapted for specific functions.

### BACKGROUND OF THE INVENTION

A key element for increasing the efficiency of modem machinery are all kinds of methods for the diagnosis of machines enabling non-invasive set of information about their technical condition. Machine condition monitoring is a very important aspect that is aimed at increasing operation reliability and leads to detecting and defining various diagnostic and reliability relations that provide a basis for conclusions about their current technical condition.

Every technical product will eventually fail. The failure of a component or a subassembly often results in the failure of the entire system. Such failures pose a threat to safety. Basically, failures can be attributed to a number of fault mechanisms, such as fatigue, corrosion and buckling. A method or device for predicting the failure of a system, component or subassembly would enable the timely repair, replacement or withdrawal of system components prior to the actual failure thereby reducing the negative consequences of component or subassembly failure.

The types of measurements that provide information about important (from the operation and reliability point of view) operating parameters of individual machines depend on the design of those machines and their operating conditions. Regardless of the design, diagnostic methods, i.e. methods enabling the diagnosis of an object's technical condition on the basis of changes in its operating parameters can be divided, depending on those parameters, into:

- methods based on the measurement of vibrations in motion nodes;
- methods for measuring temperature changes in cooperating components;
- methods for measuring the condition of lubricating liquid and impurities contained therein.

The solution according to the invention focuses on the first aspect, namely, on a method for measuring vibrations and further processing of the signals. The assessment of machine condition which involves the qualitative determination of the technical condition of a machine is carried out by analysing the measured vibration values, including the operating parameters.

### DESCRIPTION OF THE PRIOR ART

In the prior art, there are known scientific publications disclosing systems for the assessment of the technical condition of rotating machines. For example, there is known, among other ones, a scientific paper titled *"Multi-step histogram based outlier scores for unsupervised anomaly detection: ArcelorMittal engineering dataset case of study"*, I. A-M et al. (Neurocomputing, Volume 544, 2023), which presents an extension of LODA algorithms (Light Online Detector of Anomalies) and HBOS (Histogram Based Outlier Score) based on dynamic modification of normalized histograms. There is also known a scientific paper titled *"Histogram-Based Traffic Anomaly Detection"*, A. Kind, M. Stoecklin, X. Dimitropoulos, IEEE Transactions on Network and Service Management, 6(2), 2009, which describes the use of different statistical measures to compare a set of histograms. Furthermore, there is known a scientific paper titled *"Statistical Spectral Analysis for Fault Diagnosis of Rotating Machinery"* (Lucio Ciabattoni, Alessandro Freddi, IEEE Transactions on Industrial Electronics, Vol. 65, No. 5, 2016), in which the authors describe the use of statistical metrics (Lévy-Prokhorov, Kolmogorov, etc.) for the spectrum amplitude values in subsequent fragments of vibration signals, in contrast to the proposed solution which uses class intervals of a histogram calculated from a scalar diagnostic index.

There is also known a scientific paper titled *"Detection and Diagnosis of Bearing Faults Under Fixed and Time-Varying Speed Conditions Using Persistence Spectrum and Multi-Scale Structural Similarity Index"* (M.E. ElDiane Atta, D. K. Ibrahim, IEEE Sensors Journal, Vol. 22, No. 3, 2022), which describes a comparison of each new image representing the current condition of a bearing with a set of images stored as a reference, using the MS-SSIM (Multi-Scale Structural Similarity Index Measure) which operates on a special histogram calculated from the logarithmic function of power spectra. In contrast to this method, the proposed solution calculates the histogram of a one-dimensional diagnostic index.

In the prior art there are also known patent applications. For example, there is known American patent application No. US20120035885A1 titled *"Method and apparatus for monitoring and analysing vibrations in rotary machines"*, which describes a method and an apparatus for monitoring and analysing vibrations of rotary machines. This solution assumes a probability distribution described by the Gamma function, i.e. it is based on a model of a continuous, deterministic, probabilistic function and assumes a statistical threshold value, whereas the proposed solution is based on a histogram, i.e. a discontinuous estimator, and calculates the threshold value in a dynamic, data-driven way.

There is also known American application No. US20120022805A1 titled *"Mechanical health monitor apparatus and method of operation therefor",* the solution of which is based on the analysis of dynamic state-space models using features of probability distribution functions of stochastic vibration signals. There is also known American application No. US20030042861A1 titled *"System and method for predicting mechanical failures in machinery driven by an induction motor",* the solution of which is based on the comparison of current instantaneous values of induction motor torque with pre-determined reference values.

In contrast to the prior art presented above, in the proposed solution according to the invention there is no need to define reference anomalies, which significantly distinguishes this solution from the prior art and represents a significant simplification in relation to the prior art defined above.

Furthermore, in the prior art there is known patent application No. US2023342656A1 titled *"Systems and methods for applying machine learning based anomaly detection in a constrained network",* which discloses a method for detecting faults in a rotating machine by means of machine learning methods, wherein the method for signal anomaly detection comprises receiving at least one signal and determining, using at least one machine learning anomaly detection model, whether a value associated with the at least one signal is within a range of an expected value. The method also comprises, in response to a determination that the value associated with the at least one signal is not within the range of the expected value, incrementing a counter, and in response to a determination that a value of the counter is greater than or equal to a threshold value, identifying, based on the at least one signal, signal anomaly information. The method also comprises communicating the signal anomaly information to a remote computing device, receiving, from the remote computing device, diagnostics information responsive to the signal anomaly information, and, in response to receiving the diagnostics information, initiating at least one corrective action procedure.

In the prior art, there is also known patent application No. US2010114806A1 titled: *"Condition-Based Monitoring System For Machinery And Associated Methods",* which discloses a method for the automatic assessment of the technical condition of a rotating machine, which uses neural networks to classify the technical condition of a machine on the basis of vibration signal analysis.

Moreover, in the prior art there are solutions for anomalies detection relating to processes. For example, in the prior art there is known the patent application No.

US2022019209A1 titled *"Asset condition monitoring method with automatic anomaly detection",* which offers a system for the assessment of technical state by detecting anomalies based on the comparison of current signals with failure models introduced into the system. Furthermore, in the prior art there is known the patent application No. US20060265153A1 titled *"Bearing anomaly detection and location",* which describes a method for detecting anomalies in vibration signals from bearings which consists in tracking spectrum components that are not present in the vibration reference data that corresponds to a bearing in good technical condition.

Finally, in the prior art there are also known scientific publications. The scientific publication titled *"Anomaly detection on the cutter bar of a combine harvester using cyclostationary analysis"* (2023), Jorre Goossens et al., describes methods for the automatic assessment of the technical state of agricultural machinery by the analysis of the Mattews correlation coefficient (MCC) of cyclostationary components of vibration signals. However, in the presented method, it is necessary to know the type of fault to be monitored, which is not required in the solution according to the invention. Furthermore, the scientific publication titled *"Data anomaly detection with automatic feature selection and deep learning"* (2023), H. Jiang, et al., describes anomaly detection using deep learning methods and FCN (Fully Convolutional Network). Finally, the scientific paper titled "A Smart-Anomaly-Detection System for Industrial Machines Based on Feature Autoencoder and Deep Learning" (2023), I. Ahmed, et al., presents anomaly detection using signal de-noising based on a processing model with an autoencoder.

The above-described prior art solutions or, more broadly, solutions concerning methods based on the measurement of vibrations basically require verification of methods on individual machines, especially in situations where a learning set is used (machine learning methods). Unfortunately, the data obtained relate only to an unrepeatable case. Additionally, some of the solutions use a priori defined diagnostic features, which narrows down the list of faults at the level of both detection (time-/angle analyses) and identification (narrow-band spectral analyses). In the proposed solution according to the invention, on the other hand, any estimator of vibration signals can be analysed, both predefined scalar estimators (like ISO 20816 VRM) and sets of time series (the so called "trends"), determined in the time domain as well as frequency/order domain, from subsequent class intervals of the selected spectral representation of signals.

Therefore, it is the intention of this invention to overcome these shortcomings of the prior art, and more specifically, to overcome specific limitations in this respect, and thus to make it possible to detect anomalies in signals generated by an object subjected to the diagnosis, without the necessity to construct a kinetostatic model of the drive system of the machine, which, in some of the existing prior art solutions, is necessary to determine the characteristic frequencies of the individual elements of the drive system, thus significantly reducing the configuration time of the diagnostic system.

Considering the fact that there are no a priori configured scalar indices and frequency bands in typical systems for the monitoring and diagnosis of rotating machines, the solution according to the invention focuses on the detection of signals that may indicate faults manifested in an increase of the energy/power of scalar indices or spectral components within ranges other than those defined during configuration, and thus the solution according to the invention is designed mainly for the detection of anomalies both within a single object and as part of the comparison of a fleet of objects. Due to the use of an anomaly detection mechanism using an automatic classifier, the solution according to the invention does not require using a set of reference data describing the condition of proper operation of a machine to indicate the faulty state of the machine.

## SUMMARY OF THE INVENTION

The object of the invention is to develop a totally new solution in the form of a method for the automatic detection of anomalies in the vibration signals of rotating machines with the use of an anomaly detection mechanism using an automatic classifier based on the analysis of gaps in the histogram of a statistical index, including detection of signals that may indicate the development of faults in rotating machines, in particular vibration measurements relating to rotating machines by the automatic detection of anomalies in the vibration signals of a machine, especially rotating machines and other objects that generate a set of time series in the measurement process.

The purpose of the proposed method is to provide vibration signal processing to be used for the automatic (i.e. unsupervised) detection of anomalies as part of the assessment of the technical condition of rotating machines. The subject solution according to the invention is designed in particular for the diagnosis of rotating machines based on the measurement of absolute vibration, especially measurements of vibration acceleration with the use of accelerometers, both piezoelectric and those made in MEMS technology.

Importantly, in the case of the claimed solution the key point is that the processing of a set of vibration data with the use of a new anomaly detection mechanism using an automatic classifier, which plays the role of an anomaly detector, is not necessarily performed in the form of continuous vibration signals originating from the object subjected to the diagnosis.

The solution according to the invention is therefore intended to make it possible to effectively carry out the task of unsupervised detection of anomalies as part of the technical diagnosis of rotating machines by the analysis of vibration signals. In light of the aforesaid, the purpose of the invention relates to a configuration-free automated detection and identification of an anomaly representing a fault (i.e. deterioration of the technical condition) in a rotating machine and identification of the parameters of a frequency band/orders in which an increase in vibration caused by that fault is manifested.

The essence of the invention is defined by a method for the automatic detection of anomalies in vibration signals as part of the technical diagnosis of rotating machines, including signals that may indicate the development of faults in rotating machines, in particular vibration measurements relating to rotating machines by the automatic detection of anomalies in the vibrations signals of a machine according to claim 1. Dependent claims 2-7 relate to individual embodiments of the invention according to claim 1.

In order to achieve the above purposes, according to one aspect of the invention, the invention provides a method for the automatic detection of anomalies in vibration signals as part of the technical diagnosis of rotating machines consisting in that monitoring and diagnosis are performed in terms of identifying both the units or parts of an object of a rotating machine subjected to the diagnosis in such a way that pre-determined sets of time series (called "trends") are analysed or a set of time series is prepared (e.g. in such a way that vibration data are recorded in the form of a vibration signal from at least one vibration sensor mounted on the housing of mechanical elements of the rotating machine), characterized in that each subsequent vibration signal is recorded at the same length and the same sampling frequency, after which the collected vibration signals are processed in a vibration data acquisition unit equipped with an anomaly detection mechanism using an automatic classifier by means of which the vibration signal is modified by calculating the values of spectral amplitudes which are converted into time-series form, and then a value of a scalar statistical index is determined which is equal to the slope of the tangent line for each individual time series, after which the results of the scalar statistical index are stored, for which subsequently a histogram calculated relative to the constant width of the class interval is determined and empty class intervals are sought in the range from the mode to the threshold value which do not include any values of the scalar statistical index and which constitute the threshold value of anomalies, which makes it possible to determine the potential occurrence of a fault in terms of identifying both a specific unit or part of the rotating machine by mapping the determined threshold value on the stored results of the scalar statistical index and reading the corresponding spectral components, comparing them with the characteristic components the rotating machine known from the geometry of the rotating machine and thus detecting anomalies on the basis of the general knowledge that an increase in vibration as a residual process of energy conversion is related to a deterioration in the technical state of a rotating machine.

Preferably, the said vibration signal from the vibration sensor is a signal of digital acceleration of vibrations with the use of accelerometers, both piezoelectric and those made in MEMS technology.

Preferably, the said vibration signals are recorded using vibration sensors whose linear vibration transmission bandwidth is at least 10 kHz and is greater than the frequency range resulting from the sampling frequency, which is at least 8 kHz.

Preferably, together with the vibration data, the phase marker signal is recorded enabling additional calculation of sets of time series in the order domain for signals resampled by means of the vibration data acquisition unit equipped with the anomaly detection mechanism using an automatic classifier.

Preferably, during the registration of vibration data in the form of vibration signals, the rotating machine operates with stable operating parameters, in particular with stable rotational speed, whose fluctuations are not more than 2%, and with stable load, whose fluctuations are not more than 2%, wherein for the signals recorded together with the phase marker, it is preferable that the fluctuation of the rotational speed is not more than 5%.

Preferably, for the sets of time series with an asymmetrical histogram, empty histogram intervals are determined for the class intervals to the right of the class interval corresponding to the modal value, whereas for the sets of time series with a symmetrical histogram, empty histogram intervals are determined for the class intervals both to the right and left of the class interval corresponding to the modal value.

Preferably, an empty histogram interval is determined either as the class interval most distant from the class interval corresponding to the modal value or as the class interval following the greatest number of empty class intervals or as the first class interval following an empty interval.

The solution provided according to the aspect proposed above enables easier implementation of the Condition Monitoring System (CMS) in rotating machines due to the shortened configuration process of the monitoring system as compared to the prior art solutions existing on the market and due to the fact that it is not necessary to construct a kinetostatic model which may require manual measurements of geometric parameters of machine elements.

Furthermore, the solution according to the invention makes it possible to increase the effectiveness of the technical diagnosis of rotating machines, because it enables automatic detection of anomalies indicating the possibility of faults manifested in an increase in the amplitudes of anomalous components, i.e. components that do not result directly from the kinetostatic model of the machine subjected to the diagnosis.

What is more, the solution according to the invention makes it possible to change the range of data subjected to the analysis by removing selected vibration waveforms.

Another advantage of the proposed solution according to the invention is that determined anomalies are sorted according to their significance by determining the distance of the class interval of given anomaly from the class interval of the modal value.

Moreover, it is an advantage of the claimed solution according to the invention in the form of a method for assessing the technical condition that it is not necessary to establish a threshold value for a given index, because the anomaly detection mechanism using an automatic classifier decides by itself which class intervals can be considered insignificant.

## BRIEF DESCRIPTION OF THE DRAWINGS

The subject matter of the invention is presented in an embodiment in relation to the appended drawings, in which:

**FIG. 1**     shows a schematic functional diagram of the method according to the embodiment of the invention;

**FIG. 2**     shows a graph illustrating three typical phases of the assessment of the technical condition of rotating machines in a scenario with a single time window of a fault in accordance with the method according to the embodiment of the invention;

**FIG. 3**     shows a schematic diagram of carrying out the method according to the embodiment of the invention;

**FIG. 4**     shows three variants of the operation of the anomaly detection mechanism using an automatic classifier according to the invention;

## DETAILED DESCRIPTION OF THE INVENTION

The subject matter of the invention is described in detail below with reference to the appended figures and embodiments. The invention is not limited only to the detailed embodiments described herein.

A person skilled in the art will appreciate that some aspects of the embodiments may be carried out as a method or a software product. Accordingly, the embodiments may have a form of an all-hardware embodiment, an all-software embodiment (including firmware, resident software, microcode, etc.) as a "circuit", a "module" or a "system".

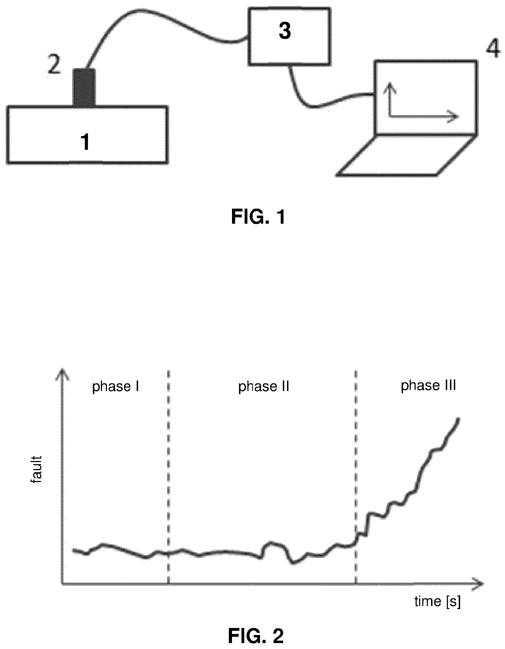

The method for the automatic detection of anomalies as part of the technical diagnosis of rotating machines, including detection of signals that may indicate the development of faults in rotating machines, in particular vibration measurements related to rotating machines by the automatic detection of anomalies in changes in the machine vibration signals is illustrated in the **FIGURES,** from **FIG. 1** to **FIG. 4.**

**FIG. 1** shows a schematic functional diagram of the method for the automatic detection of anomalies as part of the technical diagnosis of a rotating machine 1, which rotating machine 1 in this embodiment has a drive system and it further comprises a shaft, toothed gears and rolling bearings. On the housing of the mechanical elements of the rotating machine 1 there is mounted a vibration sensor 2 which processes vibration data recorded from the housing of rotating elements of the rotating machine 1. The data recorded from the rotating machine 1 goes into the vibration data acquisition unit 3 which makes the data available and on which unit the anomaly detection mechanism using an automatic classifier 4 operates. The result of carrying out the solution according to the invention is in a digital format produced by the same vibration data acquisition unit 3, with the data in the form of separate vibration waveforms being available in a digital form on a computer medium as one set.

In the embodiment carried out there is one vibration sensor 2 mounted nearest to the source of potential fault of a rotating element of the rotating machine 1 by means of screw fastening using the torque specified in the data sheet of the vibration sensor 2. In this specific embodiment, the vibration sensor 2 is placed on the input shaft of the drive system and generates a reference signal of the rotational speed in the form of a given number of pulses per 1 revolution of the shaft, which is used for the transition from the frequency domain to the order domain.

The said vibration sensor 2 is used for recording vibration signals whose linear vibration transmission bandwidth is greater than the frequency range resulting from the sampling frequency. In this case, the linear vibration transmission bandwidth is 12 kHz, with the minimum value of 10 kHz, and is greater than the frequency range which is 10 kHz, with the minimum value of 8 kHz.

The said vibration signal is the signal of digital acceleration of vibrations with the use of accelerometers, both piezoelectric ones and those made in MEMS technology. A single vibration signal from the vibration sensor 2 has a length in the time range of 1s to 20 s, at the sampling frequency in the frequency range of 20 kHz to 50 kHz. For example, in the case the sampling frequency is in the frequency range of 1 kHz to 8 kHz, the solution according to the invention may not be effective for detecting anomalies in vibrations signals due to the development of faults in the rolling bearings of rotating machines 1 due to the possibility of insufficient recording of induced structural frequencies of the object subjected to the diagnosis.

If the sets of time series (i.e. trends) are not available in advance and they need to be calculated from raw vibration signals, each subsequent vibration signal is recorded at the same wavelength and the same sampling frequency. Collected vibration signals are processed in the said vibration data acquisition unit 3 equipped with the anomaly detection mechanism using an automatic classifier 4. Then, the vibration signals are subjected to modification by calculating the values of spectral components in the frequency or order domain. Then, a selected statistical measure is calculated for the collected sets of time series (i.e. trends), e.g. the value of the slope of the tangent line. Then, a histogram is determined for the calculated vector of the statistical measure and empty class intervals are sought to the right of the class interval relating to the modal value, thus allowing the potential occurrence of a fault to be determined in terms of identifying both a specific unit or part of the rotating machine 1.

FIG. 2 shows a graph illustrating three typical phases of the assessment of the technical condition of the rotating machine 1 in a scenario with a single time window of a fault of a rotating element of the rotating machine 1 in accordance with the method according to the embodiment of the invention. In phase I, reference values are determined for the rotating machine 1 in the correct operation mode. Phase II is the monitoring of the rotating machine 1 operating in the correct operation mode. Phase III is the detection of a fault of a rotating element of the rotating machine 1. Due to the use of the anomaly detection mechanism using an automatic classifier 4, the solution according to the invention does not require manual indication of the end of phase I. Technical diagnosis consists in indicating the point of time at which a fault develops, i.e. the boundary between phase II and phase III, and indicating the rate of fault development, i.e. a parameter describing the nature of phase III. In the proposed approach, both these tasks are combined into one purpose in such a way that, for a greater number of data describing the fault relative to the number of data corresponding to phase I, the index value increases and thus the effectiveness of the solution increases with the deterioration in the technical condition of the machine. The proposed solution does not apply to the machine break-in phase, which takes place in the case of new (sometimes also repaired) machines before phase I marked in FIG.2, and in which power drops in some trends may occur.

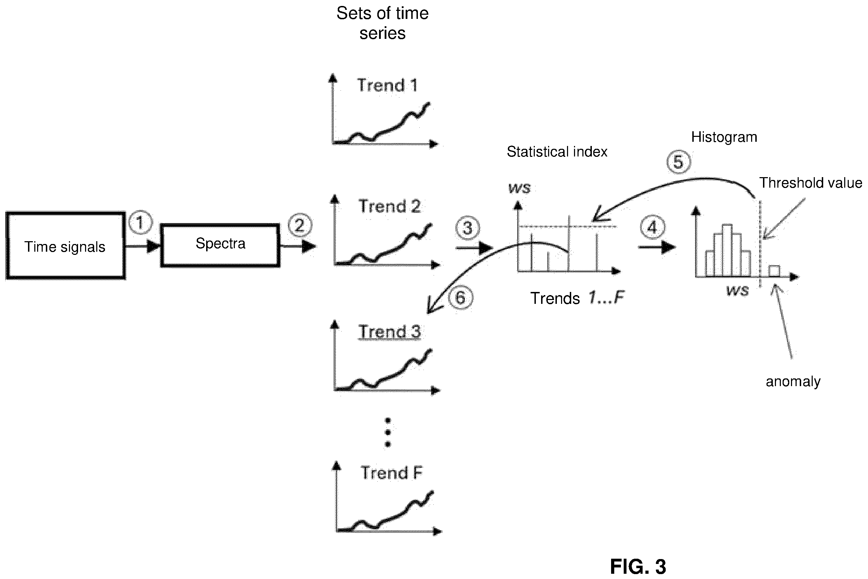

FIG. 3 shows a schematic diagram of carrying out the method according to the invention, which method consists in determining F sets of time series, the so-called trends, from raw vibration waveforms, and then determining a scalar statistical index ws, from $ws_1$ to ws, for each trend. For vector ws, the threshold value is calculated that determines the limit for anomalies, in such a way that, for vector *ws*, a histogram is calculated that shows the number of scalar statistical indices ws for the subsequent class intervals of the histogram, and then a class interval for the threshold value $ws_{anomaly}$ is determined, which is empty i.e. it does not include any values of a scalar statistical index ws. Detection of anomalies in a set of trends consists in that all class intervals that fall outside the threshold value $ws_{anomaly}$ are assigned back to given trend series from which the scalar statistical indices were calculated. In this way, from among all trends from 1 to F one can determine those trends for which the value of a scalar statistical index ws is distinctly different from the rest, which is the object of anomaly detection in the invention, and which is a new solution compared to the existing solutions because obtaining such results would require configuring the threshold value $ws_{anomaly}$, which cannot be known a priori. The value of a scalar statistical index $ws$ for subsequent trends is obtained by calculating the slope of the tangent line:

$$ws = \frac{\left(\sum_{i=1}^{n} x_i\right) \cdot \left(\sum_{i=1}^{n} y_i\right) - n\sum_{i=1}^{n}(x_i y_i)}{\left(\sum_{i=1}^{n} x_i\right)^2 - n\left(\sum_{i=1}^{n} x_i^2\right)}$$

wherein $(x_i, y_i)$ represent subsequent points of a trend, and $n$ represents the number of points in the trend, and then a histogram is calculated for the vector of the value of a scalar statistical index ws by counting the number of observations falling within the next class interval, as follows:

$$F = \sum_{i=1}^{k} m_i$$

wherein F represents the number of observations, i.e. the total number of scalar statistical indices ws (and thereby the total number of trends), k represents the total number of class intervals of a histogram ($k < F$), and $m$ represents the number of scalar statistical indices ws in a subsequent class interval. The anomaly threshold is determined when:

$$m_i = \{\emptyset\}$$

for:

$$k > \overline{ws}$$

wherein $\overline{ws}$ represents the modal value of an index ws.

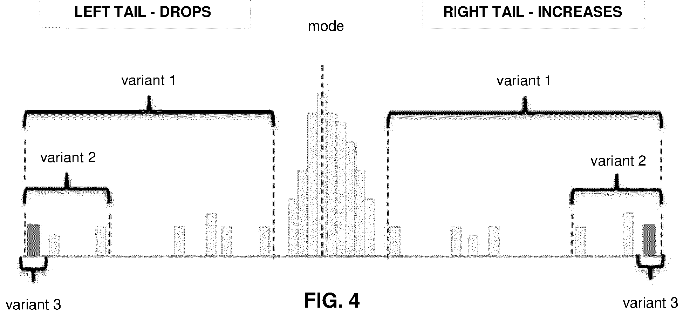

Finally, **FIG. 4** shows three resultant variants in the form of a graph of the carried out method according to the embodiment of the invention, which illustrate the empty class intervals of the histogram presented in **FIG. 3,** depending on the selected type of empty interval. In variant no. 1, the anomaly comprises all class intervals except the first empty class interval in the direction away from the class interval corresponding to the modal value and determines the anomaly; in variant no. 2, the anomaly is determined starting from the first class interval, for which subsequent empty class intervals form the combined widest interval in the direction away from the class interval corresponding to the modal value; in variant no. 3, the anomaly is determined for the class interval that is most distant from the class interval corresponding to the modal value. In this way, based on the determination of empty class intervals of the histogram of values of a statistical index, the solution according to the invention indicates such a threshold value of an index above which (or below which) it is distinctly different from other indices. Since an index value is available for each trend, finally a list of trends indicating anomalies is obtained, which typically relate to the degree of fault development in the rotating machine 1.

The above description of presented embodiments has been provided in order to enable a person skilled in the art to carry out or use the invention. Various modifications of the embodiments presented are also possible, comprising all such changes, modifications and variants that fall within the essence and scope of the appended claims. The basic principles set out herein may therefore be applied in other embodiments without going beyond the scope of the invention. Thus, the invention is not intended to be limited to the embodiments presented herein but to accord with the broadest scope consistent with the principles and novel features set out herein.

The solution according to the invention thus offers, with the use of the above-mentioned technical means as indicated in the description and in the Figures, a method for the automatic detection of anomalies in the process of technical diagnosis of rotating machines, including detection of signals that may indicate the development of faults in rotating machines, in particular vibration measurements relating to vibrating machines by the automatic detection of anomalies in changes of the vibration signals of a rotating machine.

## APPLICATION OF THE INVENTION

The invention can be broadly applied for the detection of anomalies in the process of technical diagnosis of rotating machines operating in a continuous modal value in unchanging operating conditions, for which the frequency distribution and amplitudes of vibration signals components do not change during operation in the same technical condition, i.e. they are not changed under the influence of the amplitude-frequency characteristics of the frequency response of the system as a result of a change in the operating parameters of the machine.

The solution according to the invention can be used in all applications where an assessment of the technical condition of rotating machines, such as ventilators, pumps or auxiliary servo motors, is required. The data recorded with the indicated parameters enable detection of shaft faults, including unbalance, misalignment and foundation backlashes, toothed gears, including local faults of toothed wheels and dispersed operational faults as well as local and dispersed faults of rolling bearings, which are characterized by relative increase.

## LIST OF REFERENCE NUMBERS

[0052]

1    rotating machine
2    vibration sensor
3    vibration data acquisition unit
4    anomaly detection mechanism using an automatic classifier

**Claims**

1. A method for the automatic detection of anomalies in vibration signals as part of the technical diagnosis of rotating machines, consisting in that monitoring and diagnosis are performed in terms of identifying both the units and parts of an object of a rotating machine (1) subjected to the diagnosis in such a way that vibration data in the form of a vibration signal are recorded from at least one vibration sensor (2) mounted on the housing of mechanical elements of the rotating machine (1), **characterized in that** each subsequent signal is recorded at the same length and the same sampling frequency, after which collected vibration signals are processed in a vibration data acquisition unit (3) equipped with an anomaly detection mechanism using an automatic classifier (4) by means of which the vibration signal is modified by calculating values of spectra amplitudes, which are converted into time-series form, and then a value of a scalar statistical index is determined which is equal to the slope of the tangent line for each individual time series, after which the results of the scalar statistical index are stored, for which subsequently a histogram calculated relative to the constant width of the class interval is determined and empty class intervals are sought in the range from the modal value to the threshold value which do not include any values of the scalar statistical index and which constitute the threshold value of anomalies, which makes it possible to determine the potential occurrence of a fault in terms of identifying both a specific unit or part of the rotating machine (1) by mapping the determined threshold value on the stored results of the scalar statistical index and reading the corresponding spectral components, comparing them with the characteristic components of the rotating machine (1) known from the geometry of the rotating machine (1) and thus detecting anomalies on the basis of the general knowledge that an increase in vibrations as a residual process of energy conversion is related to a deterioration in the technical state of a rotating machine.

2. The method according to claim 1, **characterized in that** the vibration signal from the vibration sensor (2) is a signal of digital acceleration of vibrations with the use of accelerometers, both piezoelectric and those made in MEMS technology.

3. The method according to claim 1 or 2, **characterized in that** vibration signals are recorded using vibration sensors (2) whose linear vibration transmission bandwidth is at least 10 kHz and is greater than the frequency range resulting from the sampling frequency, which is at least 8 kHz.

4. The method according to claim 1, **characterized in that,** together with the vibration data, the phase marker signal recorded enabling additional calculation of sets of time series in the order domain for signals resampled by means of the vibration data acquisition unit (3) equipped with the anomaly detection mechanism using an automatic classifier (4).

5. The method according to claim 1 or 4, **characterized in that,** during registration of vibration data in the form of vibration signals, the rotating machine (1) preferably operates with stable operating parameters, in particular with stable rotational speed, whose fluctuations are not more than 2%, and with stable load, whose fluctuations are not more than 2%, wherein for the signals recorded together with the phase marker, it is preferable that the fluctuation of the rotational speed is not more than 5%.

6. The method according to claim 1, **characterized in that,** for the sets of time series with an asymmetrical histogram, empty histogram intervals are determined for the class intervals to the right of the class interval corresponding to the modal value, whereas for the sets of time series with a symmetrical histogram, empty histogram intervals are determined for the class intervals both to the right and left of the class interval corresponding to the modal value.

7. The method according to claim 1 or 6, **characterized in that,** an empty histogram interval is determined either as the class interval most distant from the class interval corresponding to the modal value or as the class interval following the greatest number of empty class intervals or as the first class interval following an empty interval.

**FIG. 1**

**FIG. 2**

FIG. 3

**LEFT TAIL - DROPS**   mode   **RIGHT TAIL - INCREASES**

variant 1

variant 2

variant 3

variant 1

variant 2

variant 3

**FIG. 4**

Europäisches
Patentamt

European
Patent Office

Office européen
des brevets

## EUROPEAN SEARCH REPORT

**Application Number**

EP 25 16 7123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/391004 A1 (HEDIN LARS-OLOV [SE]) 26 December 2019 (2019-12-26) * paragraphs [0001] - [0307]; figures 1-16 * | 1-7 | INV. G01H1/00 |
| A | BERMEO-AYERBE MIGUEL ANGEL ET AL: "Remaining useful life estimation of ball-bearings based on motor current signature analysis", RELIABILITY ENGINEERING AND SYSTEM SAFETY, ELSEVIER APPLIED SCIENCE, GB, vol. 235, 5 March 2023 (2023-03-05), XP087292089, ISSN: 0951-8320, DOI: 10.1016/J.RESS.2023.109209 [retrieved on 2023-03-05] * pages 1-17; figures 1-16 * | 1-7 | |
| A | US 2021/060720 A1 (FENG FENG [CN] ET AL) 4 March 2021 (2021-03-04) * paragraphs [0001] - [0101]; figures 1-8 * | 1-7 | |

**TECHNICAL FIELDS SEARCHED (IPC)**

G01H
G05B
G01M

The present search report has been drawn up for all claims

| Place of search | Date of completion of the search | Examiner |
|---|---|---|
| The Hague | 24 July 2025 | Gassmann, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7123

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | | Publication date | Patent family member(s) | | Publication date |
|---|---|---|---|---|---|
| US 2019391004 | A1 | 26-12-2019 | CN | 102822644 A | 12-12-2012 |
| | | | EA | 201290660 A1 | 30-01-2013 |
| | | | EP | 2526389 A1 | 28-11-2012 |
| | | | EP | 4134639 A1 | 15-02-2023 |
| | | | SE | 1000631 A1 | 19-07-2011 |
| | | | US | 2012296582 A1 | 22-11-2012 |
| | | | US | 2016290854 A1 | 06-10-2016 |
| | | | US | 2019391004 A1 | 26-12-2019 |
| | | | US | 2023304849 A1 | 28-09-2023 |
| | | | WO | 2011087440 A1 | 21-07-2011 |
| US 2021060720 | A1 | 04-03-2021 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120035885 A1
- US 20120022805 A1
- US 20030042861 A1
- US 2023342656 A1
- US 2010114806 A1
- US 2022019209 A1
- US 20060265153 A1

### Non-patent literature cited in the description

- **I. A-M et al.** Multi-step histogram based outlier scores for unsupervised anomaly detection: ArcelorMittal engineering dataset case of study''. *Neurocomputing*, 2023, vol. 544
- **A. KIND** ; **M. STOECKLIN** ; **X. DIMITROPOULOS**. Histogram-Based Traffic Anomaly Detection''. *IEEE Transactions on Network and Service Management*, 2009, vol. 6 (2)
- **LUCIO CIABATTONI** ; **ALESSANDRO FREDDI**. Statistical Spectral Analysis for Fault Diagnosis of Rotating Machinery. *IEEE Transactions on Industrial Electronics*, 2016, vol. 65 (5)
- **M.E. ELDIANE ATTA** ; **D. K. IBRAHIM**. Detection and Diagnosis of Bearing Faults Under Fixed and Time-Varying Speed Conditions Using Persistence Spectrum and Multi-Scale Structural Similarity Index. *IEEE Sensors Journal*, 2022, vol. 22 (3)
- **JORRE GOOSSENS**. *Anomaly detection on the cutter bar of a combine harvester using cyclostationary analysis''*, 2023
- **H. JIANG**. *Data anomaly detection with automatic feature selection and deep learning*, 2023
- **I. AHMED**. *A Smart-Anomaly-Detection System for Industrial Machines Based on Feature Autoencoder and Deep Learning''*, 2023